# EUROPÄISCHE PATENTANMELDUNG

(11) **EP 2 896 797 A1**
(43) Veröffentlichungstag der Anmeldung: **22.07.2015**
(21) Anmeldenummer: 14194926.3
(22) Anmeldetag: 26.11.2014
(51) Int. Cl.: F01D 25/28, B25H 1/18, B65D 88/12, F02C 7/20

(54) **Läuferschwenksystem**

(30) Priorität: 17.01.2014 DE 102014200760
(71) Anmelder: Siemens Aktiengesellschaft, 80333 München (DE)
(72) Erfinder: Richter, Matthias, 12247 Berlin (DE); Rochlitzer, Marcus, 99974 Mühlhausen (DE)

(57) **Zusammenfassung**

Die Erfindung betrifft ein Läuferschwenksystem (1) zum Aufrichten eines Läufers (2), insbesondere eines Gasturbinenläufers, zur Durchführung von Wartungs- und/oder Reparaturarbeiten, umfassend einen Wendebock (9) mit daran angeordneter Schwenkeinrichtung (10) und zumindest einen Lagerbock (11), wobei das Läuferschwenksystem (1) ein mit einer Vielzahl von vertikal ausfahrbaren Stützfüßen (4, 5) versehenes und den Wendebock (9) sowie den Lagerbock (11) aufnehmendes Schwerlastgestell (3) aufweist, das transportabel ausgeführt und dazu ausgelegt ist, die Kräfte beim Aufrichten eines auf dem Wendebock (9) und dem Lagerbock (11) angeordneten Läufers (2) über die Stützfüße (4, 5) in einen Untergrund einzuleiten, auf dem es positioniert ist. Ferner betrifft die Erfindung ein Verfahren zur Durchführung von Wartungs- und/oder Reparaturarbeiten an einem Läufer (2) einer Maschine, insbesondere an einem Gasturbinenläufer, unter Verwendung eines erfindungsgemäßen Läuferschwenksystems (1).

## Beschreibung

Die vorliegende Erfindung betrifft ein Läuferschwenksystem zum Aufrichten eines Läufers, insbesondere eines Gasturbinenläufers, zur Durchführung von Wartungs- und/oder Reparaturarbeiten, umfassend einen Wendebock mit daran angeordneter Schwenkeinrichtung und zumindest einen Lagerbock.

Wartungs- und/oder Reparaturarbeiten an einem Läufer bzw. an einem Rotor werden vorteilhaft durchgeführt, während sich dieser in einer vertikalen Stellung befindet. Insbesondere das Entstapeln eines Gasturbinenläufers wird auf diese Weise erheblich vereinfacht. Zum Aufrichten von Läufern mit hohem Eigengewicht werden im Stand der Technik Läuferschwenksysteme eingesetzt. Diese umfassen einen Wendebock mit daran angeordneter Schwenkeinrichtung und zumindest einen Lagerbock. Der Wendebock und der Lagerbock werden in einem ersten Schritt auf einem industriellen Hallenboden aufgestellt und zueinander ausgerichtet, wobei zumindest der Wendebock mit geeigneten Befestigungsmitteln am Hallenboden verankert wird. In einem weiteren Schritt wird der zu bearbeitende Läufer unter Einsatz eines Krans auf dem Wendebock und dem Lagerbock abgelegt und daraufhin an der am Wendebock vorgesehenen Schwenkeinrichtung befestigt. Nunmehr kann der Läufer unter Verwendung der Schwenkeinrichtung sowie unter Einsatz eines Krans in die vertikale Stellung überführt und in dieser arretiert werden, um die anstehenden Wartungs- und/oder Reparaturarbeiten an dem aufrecht stehenden Läufer durchzuführen.

Ein Nachteil bekannter Läuferschwenksysteme besteht darin, dass ihr Einsatz eine industrielle Peripherie zumindest in Form eines industriell gefertigten Untergrunds voraussetzt, auf dem der Wendebock und der zumindest eine Lagerbock angeordnet und in den die Kräfte beim Aufrichten des Läufers über den Wendebock eingeleitet werden können. Da eine solche Peripherie jedoch nicht immer vorhanden ist, ist die Einsetzbarkeit der bekannten Läuferschwenksysteme eingeschränkt.

Ausgehend von diesem Stand der Technik ist es eine Aufgabe der vorliegenden Erfindung, ein Läuferschwenksystem der eingangs genannten Art zu schaffen, das flexibel einsetzbar ist.

Zur Lösung dieser Aufgabe schafft die vorliegende Erfindung ein Läuferschwenksystem der eingangs genannten Art, das dadurch gekennzeichnet ist, dass das Läuferschwenksystem ein mit einer Vielzahl von vertikal ausfahrbaren Stützfüßen versehenes und den Wendebock sowie den Lagerbock aufnehmendes Schwerlastgestell aufweist, das transportabel ausgeführt und dazu ausgelegt ist, die Kräfte beim Aufrichten eines auf dem Wendebock und dem Lagerbock angeordneten Läufers über die Stützfüße in einen Untergrund einzuleiten, auf dem es positioniert ist.

Ein wesentlicher Vorteil des erfindungsgemäßen Läuferschwenksystems besteht zum einen darin, dass es dank der vertikal ausfahrbaren Stützfüße des Schwerlastgestells auch auf unebenen Untergründen positioniert werden kann, weshalb der Einsatz des erfindungsgemäßen Läuferschwenksystems nicht auf Orte begrenzt ist, an denen ein zur Aufnahme von Schwerlasten industriell gefertigter ebener Untergrund vorhanden ist. Entsprechend ist das erfindungsgemäße Läuferschwenksystem sehr flexibel einsetzbar. Dank der Tatsache, dass die Kräfte beim Aufrichten des Läufers nicht allein über den Wendebock sondern über die Vielzahl der an dem Schwerlastgestell angeordneten Stützfüße in den Untergrund eingeleitet werden, wird eine sehr gute Lastverteilung erzielt, weshalb vergleichsweise geringe Anforderungen an den Untergrund für den Einsatz des erfindungsgemäßen Läuferschwenksystems zu stellen sind. Das Schwerlastgestell des erfindungsgemäßen Läuferschwenksystems ist darüber hinaus transportabel ausgeführt, so dass es zum Standort des zu bearbeitenden Läufers transportiert werden kann. Entsprechend wird die Durchführung von Wartungs- und/oder Reparaturarbeiten vor Ort ermöglicht.

Gemäß einer bevorzugten Ausgestaltung der vorliegenden Erfindung ist das Schwerlastgestell zur Aufnahme von Läufern mit einem Eigengewicht von bis zu 60 t ausgelegt, insbesondere von Läufern mit einem Eigengewicht von bis zu 100 t. Entsprechend flexibel ist die Einsetzbarkeit des erfindungsgemäßen Läuferschwenksystems.

Bevorzugt sind an dem Schwerlastgestell Bodenplatten angeordnet. Derartige Bodenplatten sind vom Bedienpersonal problemlos begehbar, wodurch eine sehr gute Handhabbarkeit des Läuferschwenksystems erzielt wird.

Vorteilhaft sind zumindest einige der Stützfüße horizontal ausfahrbar. Durch eine solche horizontale Ausfahrbarkeit wird die Stabilität und Standfestigkeit des Schwerlastgestells verbessert.

Vorteilhaft sind die Stützfüße hydraulisch betätigbar bzw. ausfahrbar, was ebenfalls mit einer Verbesserung der Handhabung des erfindungsgemäßen Läuferschwenksystems einhergeht.

Gemäß einer Variante der vorliegenden Erfindung weist das Schwerlastgestell Wände, insbesondere Stirnwände auf, deren Abmessungen derart gewählt sind, dass sie im Wesentlichen den Abmessungen von Wänden eines Normcontainers entsprechen, insbesondere eines ISO 49' Containers. Somit lässt sich das erfindungsgemäße Läuferschwenksystem problemlos transportieren.

Das Schwerlastgestell weist vorteilhaft ein an den Wänden befestigbares Dach oder eine befestigbare Plane auf, deren Abmessungen im Wesentlichen denen des Daches oder der Plane eines Normcontainers entsprechen, insbesondere eines ISO 49' Containers.

Die sich in Längsrichtung erstreckenden Wände sind bevorzugt teilweise derart klappbar oder demontierbar ausgeführt, dass sie beim Aufstellen des Läuferschwenksystems heruntergeklappt oder entfernt werden können, so dass der Wendebock und der Lagerbock frei zugänglich sind.

Gemäß einer alternativen Variante weist das Schwerlastgestell Abmessungen auf, die derart gewählt sind, dass das Schwerlastgestell in einem Normcontainer aufgenommen werden kann, insbesondere in einem ISO 49' Container.

Zur Lösung der eingangs genannten Aufgabe schafft die vorliegende Erfindung ferner ein Verfahren zur Durchführung von Wartungs- und/oder Reparaturarbeiten an einem Läufer einer Maschine, insbesondere an einem Gasturbinenläufer, unter Verwendung eines Läuferschwenksystems nach einem der vorhergehenden Ansprüche, das die Schritte aufweist:
- Aufstellen des Läuferschwenksystems an einem vorbestimmten Ort, insbesondere an einem Ort nahe dem Maschinenstandort;
- Ausrichten des Schwerlastgestells durch entsprechende Justage der Stützfüße;
- Anordnen eines zu bearbeitenden Läufers auf dem Wendebock und dem Lagerbock unter Einsatz eines Krans,
- Befestigen des Läufers an der am Wendebock vorgesehenen Schwenkeinrichtung;
- Verschwenken des Läufers in eine vertikale Stellung unter Verwendung der Schwenkeinrichtung sowie unter Einsatz eines Krans;
- Arretieren des Läufers in der vertikalen Stellung und
- Durchführung der Wartungs- und/oder Reparaturarbeiten an dem in der vertikalen Stellung angeordneten Läufer.

Gemäß einer Variante des erfindungsgemäßen Verfahrens ist an dem vorbestimmten Aufstellort kein zur Aufnahme von Schwerlasten industriell gefertigter Untergrund vorhanden.

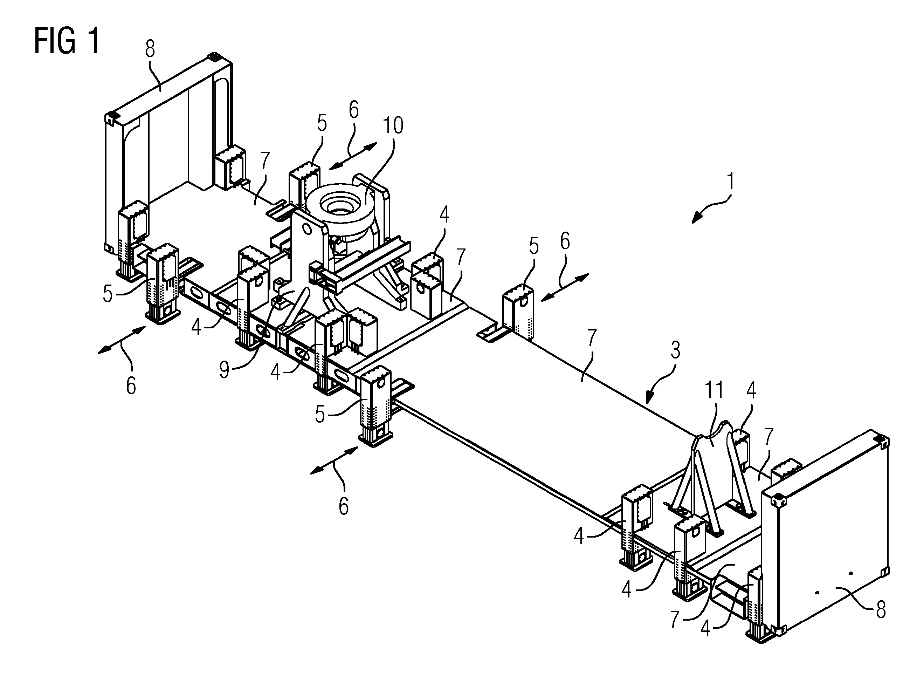

Weitere Merkmale und Vorteile der vorliegenden Erfindung werden anhand der nachfolgenden Beschreibung einer Ausführungsform eines erfindungsgemäßen Läuferschwenksystems unter Bezugnahme auf die beiliegende Zeichnung deutlich. Darin ist
Figur 1 eine schematische perspektivische Ansicht eines Läuferschwenksystems gemäß einer Ausführungsform der vorliegenden Erfindung;

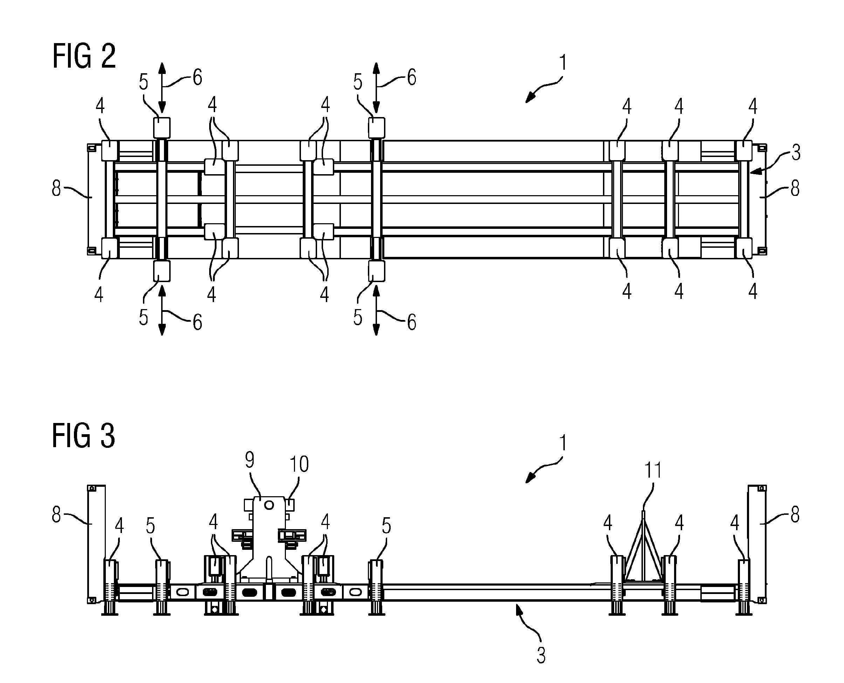

Figur 2 eine Unteransicht des in Figur 1 dargestellten Läuferschwenksystems;
Figur 3 eine Seitenansicht des in Figur 1 dargestellten Läuferschwenksystems;
Figur 4 eine perspektivische Ansicht des in Figur 1 dargestellten Läuferschwenksystems, auf dessen Schwenkbock und Lagerbock ein zu bearbeitender Läufer positioniert ist;
Figur 5 eine Ansicht der in Figur 4 dargestellten Anordnung, wobei sich der Läufer in einer teilweise aufgerichteten Stellung befindet; und
Figur 6 eine Ansicht der in Figur 4 dargestellten Anordnung, bei der sich der Läufer in einer vollständig aufgerichteten Stellung befindet.

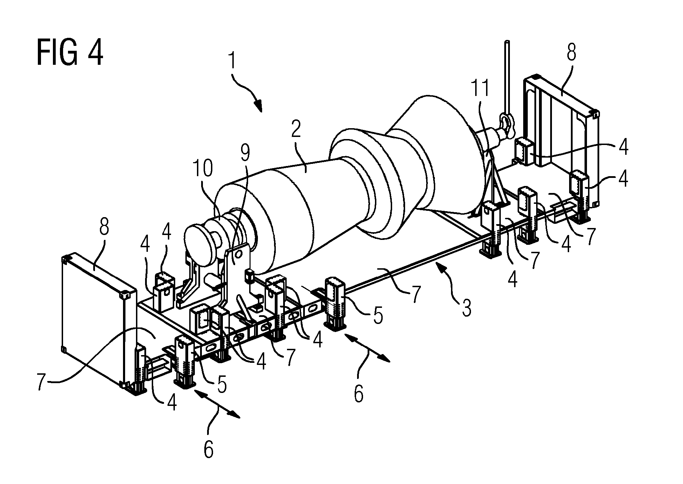

Die Figuren zeigen ein Läuferschwenksystem 1 gemäß einer Ausführungsform der vorliegenden Erfindung, dass zum Aufrichten von Läufern dient, beispielsweise zum Aufrichten eines Gasturbinenläufers 2. Das Läuferschwenksystem 1 umfasst ein Schwerlastgestell 3, das mit einer Vielzahl von jeweils vertikal ausfahrbaren Stützfüßen 4 und 5 versehen ist. Die Stützfüße 5 sind zudem in Richtung der Pfeile 6 horizontal ausfahrbar, um im Bedarfsfall die Standfestigkeit des Schwerlastgestells 3 zu verbessern. Die Betätigung der Stützfüße 4 und 5 erfolgt vorliegend hydraulisch, wobei natürlich auch alternative Betätigungsvarianten denkbar sind. An dem Schwerlastgestell 3, das beispielsweise als Stahlgestell ausgeführt sein kann, sind mehrere Bodenplatten 7 gehalten, die eine begehbare Ebene definieren. An seinen Stirnseiten ist das Schwerlastgestell mit Stirnwänden 8 versehen, deren Abmessungen derart gewählt sind, dass sie im Wesentlichen den Stirnwänden eines Normcontainers entsprechen, vorliegend eines ISO 49' Containers, wobei natürlich auch andere ISO-Container in Frage kommen. Das Läuferschwenksystem 1 umfasst zudem sich in Längsrichtung erstreckende Wände sowie ein Dach oder eine Plane, wobei diese Komponenten entfernbar an dem Schwerlastgestell 3 befestigt und in den Figuren nicht dargestellt sind. Insgesamt weist das Läuferschwenksystem 1 somit eine containerartige Anordnung auf. Auf dem Schwerlastgestell 3 sind ein Wendebock 9 mit daran angeordneter Schwenkeinrichtung 10 und ein Lagerbock 11 positioniert. Der Wendebock 9 ist vorliegend an dem Schwerlastgestell 3 verankert, wohingegen der Lagerbock 11 lose auf einer der Bodenplatten 7 aufgestellt ist. Der Wendebock 9 und der Lagerbock 11 sind derart zueinander ausgerichtet, dass ein Läufer 2 auf diesen positioniert werden kann, wie es nachfolgend unter Bezugnahme auf die Figuren 4 bis 6 noch näher beschrieben wird.

Die Schwenkeinrichtung 10 ist mit einer nicht näher dargestellten Befestigungseinrichtung versehen, die eine Befestigung eines auf den Böcken positionierten Läufers 2 an der Schwenkeinrichtung 10 gestattet. Ferner umfasst die Schwenkeinrichtung 10 eine ebenfalls nicht näher bezeichnete Arretiereinrichtung, die ein Arretieren der Schwenkeinrichtung 10 zumindest in einer vertikalen Stellung eines an dieser gehaltenen Läufers 2 ermöglicht. Befestigungseinrichtungen und Arretiereinrichtungen der zuvor genannten Art sind im Stand der Technik bereits bekannt, weshalb hierauf vorliegend nicht näher eingegangen wird.

Zur Durchführung von Wartungs-/ und Reparaturarbeiten an einem Läufer 2 wird das Läuferschwenksystem 1 in einem ersten Schritt zum Bearbeitungsort transportiert. Dank der Tatsache, dass die äußeren Abmessungen des Läuferschwenksystems 1 den Abmessungen eines genormten Transportbehälters entsprechen, ist der Transport zu Land, Wasser oder Luft unproblematisch.

Am Bearbeitungsort wird dann das Läuferschwenksystem auf einem geeigneten Untergrund aufgestellt. Ein wesentlicher Vorteil des erfindungsgemäßen Läuferschwenksystems 1 besteht darin, dass es sich bei diesem Untergrund nicht um einen zur Aufnahme von Schwerlasten industriell gefertigten Untergrund handeln muss, wie beispielsweise um einen Hallenboden, sondern dass das Läuferschwenksystem auch auf natürlichen unebenen Untergründen aufgestellt werden kann. Dank der vertikalen Ausfahrbarkeit der Stützfüße 4 und 5 kann das Schwerlastgestells 3 fast auf allen Untergründen ordnungsgemäß horizontal ausgerichtet werden. Eine Sicherung gegen ein Verkippen des Schwerlastgestells 3 wird durch die horizontal ausfahrbaren Stützfüße 5 erzielt. Aufgrund der Tatsache, dass das Schwerlastgestell 3 mit einer Vielzahl von Stützfüßen 4 und 5 versehen ist, wird zudem eine sehr gute Lastverteilung erzielt. Nach dem Aufstellen und Ausrichten des Läuferschwenksystems 1 können in einem weiteren Schritt die sich längs erstreckenden Seitenwände sowie das Dach oder die Plane des Läuferschwenksystems 1 unter Verwendung eines Krans abgehoben werden. Alternativ können die Seitenwände und das Dach aber auch schwenkbar ausgeführt sein, so dass diese abwärts abgeklappt werden können, um den Zugang zu dem Wendebock 9 und dem Lagerbock 11 zu gestatten.

In einem weiteren Schritt wird dann der zu bearbeitende Läufer unter Einsatz eines Krans auf dem Wendebock 9 und dem Lagerbock 11 positioniert und daraufhin mittels der nicht näher dargestellten Befestigungseinrichtung fest mit der an dem Wendebock 9 vorgesehenen Schwenkeinrichtung 10 verbunden, wie es in Figur 4 dargestellt ist.

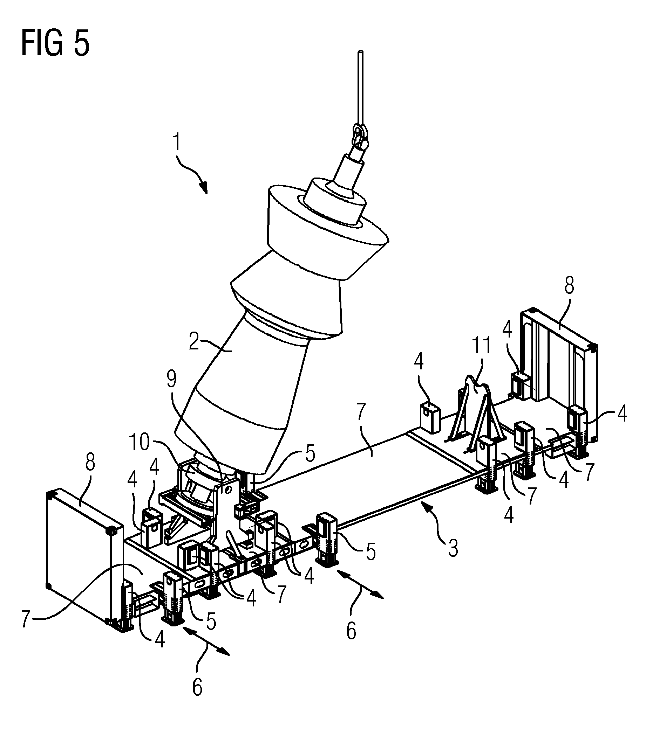

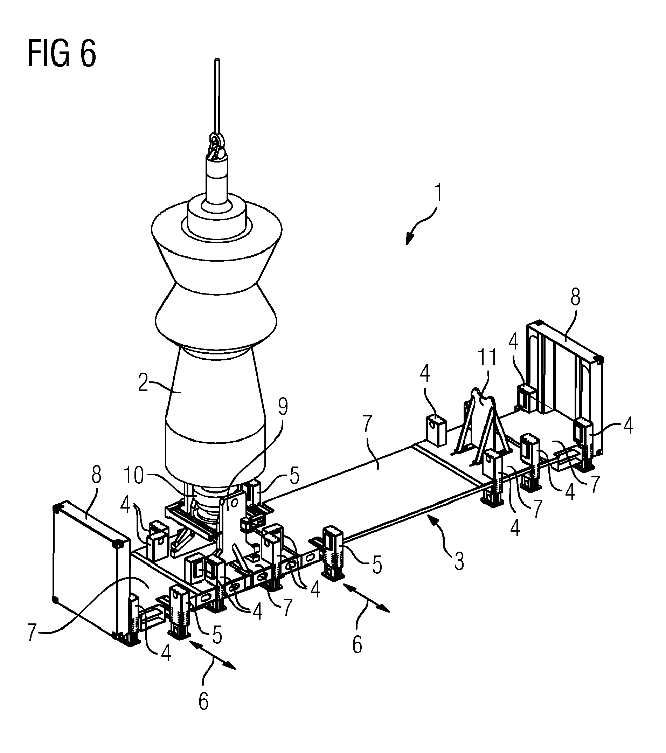

Im Anschluss wird an dem dem Wendebock 9 gegenüber liegenden freien Ende des Läufers 2 das Seil eines Krans befestigt, mit dessen Hilfe der Läufer 2 dann um die Schwenkachse der Schwenkeinrichtung 10 verschwenkt wird, wie es in Figur 5 gezeigt ist. Die Schwenkbewegung wird fortgesetzt, bis der Läufer 2 die in Figur 6 dargestellte vertikale Stellung erreicht, in der er arretiert wird, indem die nicht näher dargestellte Arretiereinrichtung der Schwenkeinrichtung 10 betätigt wird.

Nunmehr können die erforderlichen Wartungs- und/oder Reparaturarbeiten an dem aufrecht stehenden Läufer 2 durchgeführt werden, wobei der Läufer 2 weiterhin durch den Kran gesichert wird. Die Wartungs- und/oder Reparaturarbeiten können beispielsweise ein Entstapeln des Läufers 2 oder dergleichen umfassen.

Es sei darauf hingewiesen, dass die Abmessungen des erfindungsgemäßen Läuferschwenksystems 1 auch derart gewählt sein können, dass das Läuferschwenksystem 1 in seiner Gesamtheit in einem Normcontainer verstaut werden kann. Auch auf diese Weise ist ein problemloser Transport gewährleistet.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Läuferschwenksystem (1) zum Aufrichten eine Läufers (2), insbesondere eines Gasturbinenläufers, zur Durchführung von Wartungs- und/oder Reparaturarbeiten,
umfassend einen Wendebock (9) mit daran angeordneter Schwenkeinrichtung (10) und zumindest einen Lagerbock (11), **dadurch gekennzeichnet, dass** das Läuferschwenksystem (1) ein mit einer Vielzahl von vertikal ausfahrbaren Stützfüßen (4, 5) versehenes und den Wendebock (9) sowie den Lagerbock (11) aufnehmendes Schwerlastgestell (3) aufweist, das transportabel ausgeführt und dazu ausgelegt ist, die Kräfte beim Aufrichten eines auf dem Wendebock (9) und dem Lagerbock (11) angeordneten Läufers (2) über die Stützfüße (4, 5) in einen Untergrund einzuleiten, auf dem es positioniert ist.

2. Läuferschwenksystem (1) nach Anspruch 1,
**dadurch gekennzeichnet, dass**
das Schwerlastgestell (3) zur Aufnahme von Läufern (2) mit einem Eigengewicht von bis zu 60 t ausgelegt ist, insbesondere von Läufern (2) mit einem Eigengewicht von bis zu 100 t.

3. Läuferschwenksystem (1) nach einem der vorhergehenden Ansprüche,
**dadurch gekennzeichnet, dass**
an dem Schwerlastgestell (3) Bodenplatten (7) angeordnet sind.

4. Läuferschwenksystem (1) nach einem der vorhergehenden Ansprüche,
**dadurch gekennzeichnet, dass**
zumindest einige Stützfüße (5) horizontal ausfahrbar sind.

5. Läuferschwenksystem (1) nach einem der vorhergehenden Ansprüche,
**dadurch gekennzeichnet, dass**
die Stützfüße (4, 5) hydraulisch betätigbar sind.

6. Läuferschwenksystem (1) nach einem der vorhergehenden Ansprüche,
**dadurch gekennzeichnet, dass**
das Schwerlastgestell (3) Wände, insbesondere Stirnwände (8) aufweist, deren Abmessungen derart gewählt sind, dass sie im Wesentlichen Abmessungen von Seitenwänden eines Normcontainers entsprechen, insbesondere eines ISO 49' Containers.

7. Läuferschwenksystem (1) nach Anspruch 6,
**dadurch gekennzeichnet, dass**
das Schwerlastgestell (3) ein an den Wänden befestigbares Dach oder eine befestigbare Plane aufweist, deren Abmessungen im Wesentlichen denen des Daches oder der Plane eines Normcontainers entsprechen, insbesondere eines ISO 49' Containers.

8. Läuferschwenksystem (1) nach Anspruch 6 oder 7,
**dadurch gekennzeichnet, dass**
die sich in Längsrichtung erstreckenden Seitenwände zumindest teilweise klappbar ausgeführt sind.

9. Läuferschwenksystem (1) nach einem der Ansprüche 1 bis 5, **dadurch gekennzeichnet, dass**
das Schwerlastgestell (3) Abmessungen aufweist, die derart gewählt sind, dass das Schwerlastgestell (3) in einem Normcontainer aufgenommen werden kann, insbesondere in einem ISO 49' Container.

10. Verfahren zur Durchführung von Wartungs- und/oder Reparaturarbeiten an einem Läufer (2) einer Maschine,
insbesondere an einem Gasturbinenläufer, unter Verwendung eines Läuferschwenksystems (1) nach einem der vorhergehenden Ansprüche, das die Schritte aufweist:
- Aufstellen des Läuferschwenksystems (1) an einem vorbestimmten Ort; insbesondere an einem Ort nahe dem Maschinenstandort;
- Ausrichten des Schwerlastgestells (3) durch entsprechende Justage der Stützfüße (4, 5);
- Anordnen eines zu bearbeitenden Läufers (2) auf dem Wendebock (9) und dem Lagerbock (11) unter Einsatz eines Krans,
- Befestigen des Läufers (2) an der am Wendebock (9) vorgesehenen Schwenkeinrichtung (10);
- Verschwenken des Läufers (2) in eine vertikale Stellung unter Verwendung der Schwenkeinrichtung (1) sowie unter Einsatz eines Krans;
- Arretieren des Läufers (2) in der vertikalen Stellung und
- Durchführung der Wartungs- und/oder Reparaturarbeiten an dem in der vertikalen Stellung angeordneten Läufer (2).

11. Verfahren nach Anspruch 10,
**dadurch gekennzeichnet, dass**
an dem vorbestimmten Aufstellort kein zur Aufnahme von Schwerlasten industriell gefertigter Untergrund vorhanden ist.
